# EUROPÄISCHE PATENTSCHRIFT

(11) **EP 4 304 063 B1**
(45) Veröffentlichungstag und Bekanntmachung des Hinweises auf die Patenterteilung: **21.05.2025**
(21) Anmeldenummer: 23183154.6
(22) Anmeldetag: 03.07.2023
(51) Int. Cl.: H02K 15/04, B21D 43/00, B21D 51/26, B21F 23/00, B65G 47/84, B07C 5/342, B07B 13/05, B21F 1/02

(54) **SORTIERMASCHINE UND FERTIGUNGSANLAGE SOWIE SORTIERVERFAHREN FÜR STABLEITER**
SORTING MACHINE AND PRODUCTION SYSTEM AND SORTING METHOD FOR ROD CONDUCTORS
MACHINE DE TRI ET INSTALLATION DE FABRICATION AINSI QUE PROCÉDÉ DE TRI POUR BARRES CONDUCTRICES

(30) Priorität: 08.07.2022 DE 102022206997
(43) Veröffentlichungstag der Anmeldung: 10.01.2024
(73) Patentinhaber: FELSOMAT GmbH & Co. KG, 75203 Königsbach-Stein (DE)
(72) Erfinder: PESCHINA, Jürgen, 75438 Knittlingen (DE); ZACHMANN, Raphael, 75196 Remchingen (DE)
(74) Vertreter: Kohler Schmid Möbus Patentanwälte

(56) Entgegenhaltungen:
- US-A- 3 017 690
- US-A- 3 245 135
- US-A1- 2016 368 040
- US-A1- 2019 190 359
- US-A1- 2021 194 340
- US-B2- 9 624 039

## Beschreibung

### Hintergrund der Erfindung

Die Erfindung betrifft eine Sortiermaschine für Stableiter. Ferner betrifft die Erfindung eine Fertigungsanlage für Stableiter. Zudem betrifft die Erfindung ein Verfahren zum Sortieren von Stableitern.

Für die Fertigung elektrodynamischer Maschinen, wie elektrischer Generatoren oder elektrischer Motoren, können kupferhaltige, gebogene Stableiter verwendet werden.

Die Herstellung gebogener Stableiter kann dabei in einer Maschinenlinie bzw. Fertigungsanlage wie folgt ablaufen: Ein mit einer Isolierschicht ummantelter und isolierter Kupferflachdraht wird von einer Drahtrolle abgerollt und begradigt. In gleichen Abständen wird die Ummantelung des begradigten Kupferflachdrahts entfernt ("abisoliert"), beispielsweise durch ein Schneidwerkzeug oder mittels eines Laserstrahls. Der Kupferflachdraht wird dann in den abisolierten Bereichen in gleich lange, ungebogene Stableiter (auch als I-Pins bezeichnet) geteilt. Die so erhaltenen ungebogenen Stableiter können sodann an eine Biegemaschine weitergegeben und dort zu gebogenen Stableitern weiterverarbeitet werden.

Während der Herstellung der ungebogenen Stableiter können jedoch Produktionsfehler auftreten. Beispielsweise kann der auf der Drahtrolle aufgerollte Kupferflachdraht bereits Beschädigungen aufweisen, wie etwa Fehlstellen in der Isolierschicht. Auch können beim Abisolieren oder beim Durchtrennen des Kupferflachdrahts Fertigungsfehler auftreten, beispielsweise durch eine unzureichende Abisolierung am Kupferflachdraht oder eine ungleichmäßige Teilung des abisolierten Kupferflachdrahts.

Fehlerhafte ungebogene Stableiter sind jedoch für die Fertigung einer elektrodynamischen Maschine unbrauchbar und müssen dementsprechend aussortiert werden. Zum Ausschleusen eines fehlerhaften Stableiters kann beispielsweise eine Rutsche eingefahren werden, auf welche der entsprechende Stableiter abgelegt bzw. fallen gelassen wird, sodass er unter Schwerkrafteinfluss aus dem Fertigungsprozess in eine geeignete Ablageeinrichtung geführt wird. Das Einfahren der Rutsche zum Aussortieren von Stableitern ist jedoch zeitaufwendig. Insbesondere ist es erforderlich, die Taktrate, mit welcher die Stableiter gefertigt werden, zu reduzieren, um die Rutsche einfahren zu können.

US 9,015,929 B2 beschreibt eine Apparatur zum Einsetzen eines vorgeformten elektrischen Stableiters in eine Biegeeinrichtung (Twisteinrichtung). Der vorgeformte Stableiter weist zwei geradlinige Arme auf, die parallel zueinander verlaufen und durch einen gekrümmten Abschnitt miteinander verbunden sind. Die Einsetz-Apparatur umfasst Folgendes: eine Zuführeinrichtung, die den vorgeformten Stableiter in einer Zuführrichtung anordnet; und eine um eine Drehachse rotierbare Transfereinrichtung, die den Leiter von der Zuführeinrichtung in eine Griffposition zieht, in der der Leiter entlang der Zuführrichtung angeordnet ist, und ihn um 90° in eine Einführposition dreht, in der der Leiter entlang einer Einführrichtung angeordnet ist, die senkrecht zur Zuführrichtung und parallel zu einer Tasche an der Biegeeinrichtung verläuft. Die Transfereinrichtung kann vier um 90° bezüglich der Drehachse gegeneinander versetze Griffklemmen aufweisen. Mittels einer mechanischen Indexplatte kann die Transfereinrichtung in 90°-Schritten um die Drehachse gedreht werden, sodass mit jedem Drehschritt ein Leiter von der Griffposition in die Einführposition überführt wird. Die Apparatur umfasst weiterhin eine Einführeinrichtung, die den Leiter in die Biegeeinrichtung einführt, wobei die Einführeinrichtung mit Schubmitteln ausgestattet ist, die den Leiter entlang der Einführrichtung bewegen, bis der Leiter zumindest teilweise in die Tasche eingeführt ist. Der Leiter bleibt während des Ziehens aus der Zuführeinrichtung, des Überführens von der Griffposition in die Einführposition und des Einführens in die Biegeeinrichtung geklemmt, bis er in die Taschen der Biegeeinrichtung eingeführt wurde.

US 9,624,039 B2 offenbart eine Behälterbehandlungsmaschine, welche ein um eine Maschinenachse drehbar angetriebenes Transportelement aufweist. Die Drehrichtung des Transportelements ist dabei umkehrbar. Das Transportelement weist mehrere Behälteraufnahmen auf und ist geeignet Behälter von einem Behältereinlauf zu ggf. mehreren Behandlungsstationen und schließlich zu einem Behälterauslauf zu verbringen. Während die jeweiligen Behälter mit einer der Behälteraufnahmen im Eingriff stehen und mithilfe des Transportelements umgelagert werden, können sie von bogenförmigen Behälterführungen, welche abschnittsweise um das Transportelement angeordnet sind, in der jeweiligen Behälteraufnahme gehalten werden. Weiterhin wird ein Verfahren zum Behandeln von Behältern beschrieben, wobei die Umkehrbarkeit der Drehrichtung eines Transportelements ausgenutzt wird.

US 2016/03680040 A1 offenbart eine Werkzeugmaschine und ein Verfahren zum Ausschleusen von Werkstückteilen. Die Werkzeugmaschine weist eine verfahrbare Aufnahmeeinrichtung und vorzugsweise eine steuerbare Ausschleuseinrichtung zum Ausschleusen von Werkstückteilen aus der Aufnahmeeinrichtung auf. In einer Ausführungsform weist die steuerbare Ausschleuseinrichtung eine verschwenkbare Klappe mit zumindest zwei Schwenkstellungen auf. Die Werkzeugmaschine kann weiterhin eine oder mehrere Ausschleusrutschen zur Weiterleitung ausgeschleuster Werkstückteile zu einem jeweiligen Auffangbehälter aufweisen. Unter Anwendung des offenbarten Verfahrens kann die Werkzeugmaschine zur Sortierung von Werkstückteilen während der Bearbeitung eines Werkstücks genutzt werden.

US 2019/0190359 A1 beschreibt eine Fertigungsapparatur sowie ein Fertigungsverfahren zur Herstellung einer elektrischen Drehmaschine (Motor, Generator). In einem kontinuierlichen Prozess werden dabei Stableiter bestimmter Länge zugeführt und zu Spulensegmenten gebogen, welche wiederum mithilfe eines drehbaren Anordnungskörpers angeordnet werden können, um ein Spulenelement zu bilden.

US 2021/0194340 A1 betrifft ein Verfahren zur Bereitstellung von Formstäben aus Stableitern. Vorzugsweise werden dabei mehrere Stableiter in Vertiefungen eines Warenträgers angeordnet und fixiert und anschließend gemeinsam umgeformt. Ein Umformwerkzeug kann Teil des Warenträgers sein. Der Warenträger kann zumindest zweiteilig ausgebildet sein, wobei die zumindest zwei Warenträgerteile über eine gemeinsame Schwenkachse miteinander verbunden sind. Es ist weiterhin eine Fertigungsanlage zum Herstellen der Formstäbe offenbart, wobei die Fertigungsanlage Teil einer Gesamtanlage für die Herstellung von Baugruppen für elektrische Maschinen sein kann. Die Fertigungsanlage weist Einrichtungen zum Abrollen, Richten und Ablängen sowie zum teilweisen Abisolieren eines Leiterdrahts auf.

### Aufgabe der Erfindung

Es ist eine Aufgabe der Erfindung, das Aussortieren von Stableitern, die nicht an einen Folgeprozess übergeben werden sollen, zu beschleunigen.

### Beschreibung der Erfindung

Diese Aufgabe wird erfindungsgemäß gelöst durch eine Sortiermaschine nach Anspruch 1, eine Fertigungsanlage mit den in Anspruch 15 angegebenen Merkmalen sowie ein Sortierverfahren gemäß Anspruch 18.

### Erfindungsgemäße Sortiermaschine

Erfindungsgemäß ist eine Sortiermaschine für Stableiter vorgesehen, die folgendes aufweist:
- einen in zwei entgegengesetzten Richtungen um eine Drehachse drehbaren Rotor mit wenigstens zwei in Umfangsrichtung gegeneinander versetzten Aufnahmen für je einen Stableiter,
- eine Zuführeinrichtung, insbesondere einen Greifer, zum Verbringen je eines Stableiters zu einer an einer Aufnahmestelle befindlichen Aufnahme des Rotors,
- eine Führungseinrichtung, um bei einer Drehung des Rotors in einer ersten Richtung den an der Aufnahmestelle von einer der Aufnahmen aufgenommenen Stableiter von der Aufnahme zu einer Übergabestelle zu führen,
- eine Ausschleuseinrichtung, um bei einer Drehung des Rotors in einer zweiten Richtung den an der Aufnahmestelle von einer der Aufnahmen aufgenommenen Stableiter von der Aufnahme zu entnehmen.

Die Sortiermaschine ermöglicht es somit, einen auf eine der Aufnahmen aufgesetzten Stableiter durch Drehen des Rotors in der einen oder anderen Richtung entweder zu der Übergabestelle zu verbringen, von wo aus er einer weiteren Bearbeitung zugeführt werden kann, oder aus dem Fertigungsprozess auszuschleusen. Indem sowohl weiterzuverarbeitende wie auch auszusortierende Stableiter an derselben Aufnahmestelle auf eine der Aufnahmen des Rotors verbracht werden, kann die Zufuhr der Stableiter unabhängig von deren weiterer Bestimmung stets in derselben Weise und Geschwindigkeit bzw. Taktrate erfolgen. Auch die Drehung des Rotors kann unabhängig von der Drehrichtung mit derselben Geschwindigkeit bzw. Taktrate erfolgen. In beiden Fällen (Ausschleusen bzw. Übergeben des Stableiters) wird der Rotor nach dem Auflegen eines Stableiters auf eine der Aufnahmen so weit gedreht, dass eine benachbarte Aufnahme zu der Aufnahmestelle gelangt. Somit kann der nächste Stableiter ohne Verzögerung oder gar Unterbrechung des Fertigungsablaufs auf diese Aufnahme aufgesetzt und - wie zuvor beschrieben - durch Drehen des Rotors in einer geeigneten Richtung sortiert werden.

Die Stableiter sind grundsätzlich gerade/ungebogen (sog. I-Pins). Die Aufnahmen sind in der Regel drehsymmetrisch um die Drehachse des Rotors angeordnet. Typischerweise übernimmt die Zuführeinrichtung den jeweiligen Stableiter von einer Fertigungsmaschine zum Herstellen von (geraden) Stableitern. Die Aufnahmestelle befindet sich vorzugsweise vertikal über der Drehachse des Rotors.

Von der Übergabestelle kann der Stableiter einem Folgeprozess zugeführt werden, beispielsweise kann der Stableiter an eine Biegemaschine übergeben werden. Die Führungseinrichtung kann einen aufgenommenen Stableiter bei einer Drehung des Rotors in der ersten Richtung bis zum Erreichen der Übergabestelle oder bis kurz vor Erreichen der Übergabestelle an der Aufnahme halten.

Die Ausschleuseinrichtung bewirkt, dass ein aufgenommener Stableiter bei einer Drehung des Rotors in der zweiten Richtung - typischerweise nach Überstreichen eines bestimmten Drehwinkels - von der Aufnahme gelöst wird. Sodann kann die Ausschleuseinrichtung den Stableiter in eine Sammelvorrichtung leiten.

Die erfindungsgemäße Sortiermaschine wird vorzugsweise in einem unten beschriebenen, erfindungsgemäßen Verfahren zum Sortieren von Stableitern verwendet.

Die Führungseinrichtung kann eine Führungsnut aufweisen. Durch eine Führungsnut kann sichergestellt werden, dass sich die Stableiter beim Drehen des Rotors in der ersten Richtung nicht vorzeitig von der Aufnahme lösen. Die Führungsnut kann die Stableiter sicher zu der Übergabestelle führen. Die Führungsnut erstreckt sich zumindest in einem ersten Abschnitt entlang einer Umfangsbahn um die Drehachse des Rotors, wobei ein Radius der Führungsnut einem Abstand der Aufnahmen von der Drehachse entspricht. Beim Drehen des Rotors in der ersten Richtung wird ein an einer der Aufnahmen aufgenommener Stableiter zunächst in die Führungsnut eingeführt. Sodann hält die Führungsnut den Stableiter zumindest über einen gewissen Winkelbereich an der Aufnahme und führt ihn zu der Übergabestelle.

Die Aufnahmen können je mit einer Aufnahmerille gebildet sein. Dies vereinfacht einerseits den Aufbau des Rotors. Zum anderen ermöglichen Aufnahmerillen ein besonders einfaches Einlegen der Stableiter in eine jeweilige Aufnahmerille. Durch die vertiefte Gestaltung der Rille ist der Stableiter automatisch gegen Verrutschen in Umfangsrichtung gesichert.

Bei einer bevorzugten Ausführungsform der Sortiermaschine ist vorgesehen, dass die Aufnahmen jeweils an einem Flügel des Rotors ausgebildet sind. Durch voneinander separate Flügel mit je einer Aufnahme kann der Rotor besonders leicht bzw. mit geringem Trägheitsmoment ausgeführt werden.

Vorzugsweise ist weiterhin vorgesehen, dass die Führungseinrichtung und die Ausschleuseinrichtung gemeinsame Schienensegmente aufweisen, und dass die Flügel jeweils radiale Rücknehmungen für einen Eingriff der Schienensegmente aufweisen. Je nach Drehstellung des Rotors erstrecken sich die Schienensegmente jeweils durch eine Rücknehmung an einem oder mehreren Flügeln. Die Rücknehmungen erlauben, dass sich die gemeinsamen Schienensegmente durch die Flügel hindurch erstrecken. Die gemeinsame Gestaltung der Schienensegmente für die Führungseinrichtung und die Ausschleuseinrichtung kann sicherstellen, dass die Stableiter nicht in die Sortiermaschine fallen können, beispielsweise falls ausnahmsweise ein Stableiter nicht korrekt an einer Aufnahme platziert werden sollte. Auf der Seite der Führungseinrichtung können die Schienensegmente eine Führungsnut zum Rotor hin begrenzen.

Bei einer vorteilhaften Ausführungsform weist der Rotor zwei einander bezüglich der Drehachse gegenüberliegende Aufnahmen auf. Zum Sortieren eines an einer der Aufnahmen aufgenommenen Stableiters wird der Rotor somit um 180° in der ersten oder zweiten Richtung gedreht; die andere Aufnahme wird dadurch an die Aufnahmestelle gebracht. Die Aufnahmen sind vorzugsweise jeweils an einem radialen Flügel des Rotors ausgebildet. Auch die Flügel liegen einander typischerweise gegenüber.

Bei zwei gegenüberliegenden Aufnahmen kann die Führungseinrichtung eine Drehung des Stableiters zwischen der Aufnahmestelle und der Übergabestelle um 180° bewirken. Bei der Drehung des Stableiters um 180° wird der Rotor ebenfalls um 180° gedreht. Wenn der Stableiter einen Rechteckquerschnitt aufweist und beispielsweise mit einer unteren Breitseite auf die Aufnahme aufgelegt wird, weist die untere Breitseite nach dem Drehen um 180° nach oben und eine beim Auflegen obere Breitseite weist nach unten. Die Orientierung des Stableiters wird insofern beibehalten, als dass auch nach der Drehung um 180° eine seiner Breitseiten nach unten weist. Dies kann für die Weiterverarbeitung erwünscht sein.

Bevorzugt liegt die Übergabestelle der Aufnahmestelle bezüglich der Drehachse des Rotors gegenüber. Dies vereinfacht das Wenden des Stableiters um 180° bei einer Weitertaktung des Rotors um 180°. Der Stableiter kann dann bis zur Übergabestelle an der Aufnahme gehalten werden.

Besonders bevorzugt hält die Führungseinrichtung den Stableiter bis zur Übergabestelle an der Aufnahme. Derart kann sichergestellt werden, dass der Stableiter im Takt der Drehung des Rotors um 180° gedreht wird.

Bei einer alternativen Ausführungsform weist der Rotor drei bezüglich der Drehachse um jeweils 120° gegeneinander versetzte Aufnahmen auf. Zum Sortieren eines an einer der Aufnahmen aufgenommenen Stableiters wird der Rotor somit um 120° in der ersten oder zweiten Richtung gedreht; die nächste Aufnahme wird dadurch an die Aufnahmestelle gebracht. Die Aufnahmen sind vorzugsweise jeweils an einem radialen Flügel des Rotors ausgebildet. Auch die Flügel können um jeweils 120° gegeneinander versetzt sein.

Bei drei um 120° versetzten Aufnahmen kann die Führungseinrichtung eine Drehung des Stableiters zwischen der Aufnahmestelle und der Übergabestelle um 90° bewirken. Bei der Drehung des Stableiters um 90° wird der Rotor typischerweise um 120° gedreht. Der Stableiter kann zunächst mit dem Rotor um 120° gedreht werden, und sodann kann die Führungseinrichtung - nachdem der Stableiter von der Aufnahme gelöst wurde - ein Zurückdrehen um 30° bewirken. Wenn der Stableiter einen Rechteckquerschnitt aufweist und beispielsweise mit einer Breitseite auf die Aufnahme aufgelegt wird, weist nach dem Drehen um 90° eine Schmalseite nach unten. Die Orientierung des Stableiters wird somit um 90° gedreht. Dies kann für die Weiterverarbeitung erwünscht sein.

Bevorzugt ist für eine Drehung des Stableiters um 90° die Übergabestelle bezüglich der Aufnahmestelle seitlich versetzt. Dies vereinfacht es, den Stableiter nach einer Drehung des Rotors um 120° von der Aufnahme zu lösen und zu der Übergabestelle zu führen.

Besonders bevorzugt löst die Führungseinrichtung den Stableiter vor der Übergabestelle von der Aufnahme. Der Stableiter wird dann unabhängig vom Rotor von der Führungseinrichtung bis zur Übergabestelle geführt. Dabei kann der Stableiter insbesondere nach einer Drehung um 120° gemeinsam mit dem Rotor um 30° zurückgedreht werden, sodass insgesamt die Drehung des Stableiters 90° beträgt. Die Übergabestelle kann unterhalb der Position liegen, an welcher der Stableiter von der Aufnahme gelöst wird.

Wenn die Führungseinrichtung eine Führungsnut aufweist, kann die Führungsnut an der Übergabestelle mit einem vertikal verlaufenden Nutabschnitt enden. Der Stableiter kann im vertikal verlaufenden Nutabschnitt unter Schwerkrafteinfluss nach unten fallen. Eine Länge des vertikalen Nutabschnitts ist typischerweise relativ gering, beispielsweise höchstens 2 cm, bevorzugt höchstens 1 cm. Dadurch wird die Belastung des Stableiters beim Aufprall am Ende der Führungsnut verringert. Durch den vertikalen Verlauf kann zudem die gewünschte, um 90° gedrehte Ausrichtung des Stableiters erhalten werden.

Die Ausschleuseinrichtung kann eine Rutsche aufweisen. Die Rutsche untergreift den Stableiter bei der Drehung des Rotors in der zweiten Richtung, sodass der Stableiter von der Aufnahme abgehoben wird. Sodann kann der Stableiter auf der Rutsche abgleiten. Dies bewirkt mit einfachen Mitteln ein kontrolliertes Ausschleusen des Stableiters.

Vorteilhafterweise ist vorgesehen, dass die Ausschleuseinrichtung eine Weiche aufweist, um Stableiter von der Rutsche wahlweise einer von mehreren unterschiedlichen Sammelvorrichtungen zuzuführen. So können beispielsweise Stableiter mit erkannten Fehlstellen von solchen Stableitern getrennt werden, die zur Kontrolle des Prozessablaufs als Prüfteile ausgeschleust werden. Die Weiche kann mit einer schwenkbaren Klappe gebildet sein. Durch Verschwenken der Klappe kann in besonders einfacher Weise und schnell zwischen den Sammelvorrichtungen umgeschaltet werden.

Alternativ oder zusätzlich zu der Rutsche kann die Ausschleuseinrichtung ein Entnahmewerkzeug, vorzugsweise eine Gabel, zum Ausheben des Stableiters aus der Aufnahme aufweisen. Das Entnahmewerkzeug kann den auszuschleusenden Stableiter fassen, im Falle einer Gabel untergreifen, und zu einer Sammelvorrichtung verbringen. Die Sammelvorrichtung bzw. eine der Sammelvorrichtungen kann bei Verwendung eines solchen Entnahmewerkzeugs auf gleicher Höhe wie der Rotor oder oberhalb des Rotors angeordnet sein.

Eine vorteilhafte Ausführungsform der Sortiermaschine ist dadurch gekennzeichnet, dass eine Speichereinrichtung, insbesondere eine Kassette, zur Aufnahme der Stableiter an der Übergabestelle vorgesehen ist. In der Speichereinrichtung können mehrere Stableiter gesammelt und gemeinsam einer Weiterverarbeitung zugeführt werden. Anders als bei der unmittelbaren Übergabe einzelner Stableiter an einen Folgeprozess werden durch das Sammeln der Stableiter in der Speichereinrichtung Unterbrechungen des Folgeprozesses vermieden, wenn einer der Stableiter ausgeschleust wird und somit nicht für die Weiterbearbeitung zur Verfügung steht. Indem mehrere Stableiter in der Speichereinrichtung gesammelt und gemeinsam weitergegeben werden, wird ein Puffer für den Folgeprozess geschaffen.

Vorzugsweise ist eine Wechseleinrichtung vorgesehen, um wahlweise eine von mehreren Speichereinrichtungen, insbesondere Kassetten, an der Übergabestelle anzuordnen. Somit kann schnell zwischen den beiden Speichereinrichtungen gewechselt werden, wenn eine erste der Speichereinrichtungen voll ist. Vorzugsweise ist beim Wechsel der Speichereinrichtungen keine Unterbrechung der Stableiterherstellung erforderlich. In der Regel genügt es, die Geschwindigkeit bzw. Taktrate mit der die Stableiter bereitgestellt werden, für den Wechsel der Speichereinrichtung zu reduzieren.

### Erfindungsgemäße Fertigungsanlage

In den Rahmen der vorliegenden Erfindung fällt auch eine Fertigungsanlage für Stableiter. Die Fertigungsanlage weist folgendes auf:
- eine Abrolleinrichtung zum Abwickeln von Draht von einer Spule,
- eine Richteinrichtung zum Geraderichten des abgewickelten Drahts,
- eine Abisoliereinrichtung zum bereichsweisen Entfernen einer Isolierschicht von dem Draht,
- eine Trenneinrichtung zum Zerteilen des Drahtes, sodass einzelne Stableiter erhalten werden,
- eine oben beschriebene, erfindungsgemäße Sortiermaschine.

Die Fertigungsanlage ermöglicht das Herstellen von geraden Stableitern (I-Pins) aus aufgewickeltem Draht, insbesondere Flachdraht mit Rechteckquerschnitt, wobei fehlerhafte Stableiter oder für Prüfzwecke bestimmte Stableiter schnell, insbesondere ohne Verlangsamung der Produktionsgeschwindigkeit, aussortiert werden können. Die Abrolleinrichtung, die Richteinrichtung, die Abisoliereinrichtung und die Trenneinrichtung können gemeinsam als eine Fertigungsmaschine für gerade bzw. ungebogene Stableiter bezeichnet werden.

Der auf der Spule aufgewickelte Draht ist grundsätzlich durchgängig mit einer Isolierschicht überzogen. Die Abrolleinrichtung kann einen Antrieb für die Spule aufweisen. Alternativ oder zusätzlich kann die Abrolleinrichtung ein Abwickeln durch Ziehen am Draht ermöglichen.

Die Richteinrichtung umfasst typischerweise mehrere Rollen, zwischen denen der Draht hindurchgeführt werden kann. Die Rollen sind vorzugsweise auf vier Seiten angeordnet, um einen Flachdraht mit einem Rechteckquerschnitt in seinen beiden Querrichtungen geradezurichten.

Die Abisoliereinrichtung kann einen Laser zum Abschmelzen und/oder Verdampfen der Isolierschicht aufweisen. Alternativ kann die Abisoliereinrichtung ein oder mehrere Stanzwerkzeuge aufweisen, um die Isolierschicht vom Draht abzuschneiden. Vorzugsweise sind vier Sätze von je zwei Stanzwerkzeugen vorgesehen, um die Isolierschicht von den vier Flachseiten und den Kanten des Drahtes abzuschneiden.

Die Trenneinrichtung kann ein Messer und einen Amboss aufweisen. Das Zerteilen erfolgt typischerweise in Bereichen, in denen die Isolierschicht entfernt wurde, insbesondere mittig in den abisolierten Bereichen. Durch das Zerteilen des Drahtes werden einzelne ungebogene Stableiter erhalten.

Die Zuführeinrichtung der Sortiermaschine ermöglicht es, die Stableiter zu einer der Aufnahmen des Rotors zu verbringen, nachdem diese von der Trenneinrichtung vom Draht abgetrennt wurden. Insbesondere kann ein Greifer vorgesehen sein, um die Stableiter zu ergreifen und auf der jeweiligen Aufnahme abzulegen.

Die Fertigungsanlage kann weiterhin eine Biegemaschine zum Biegen der Stableiter aufweisen. Der Biegemaschine werden diejenigen Stableiter zugeführt, die mit der Sortiermaschine durch Drehen des Rotors in der ersten Richtung für die Weiterverarbeitung bestimmt wurden. Die Fertigungsanlage kann eine oder mehrere Speichereinrichtungen für die Stableiter aufweisen, in welche die weiterzuverarbeitenden Stableiter von der Sortiermaschine einsortiert werden. Die in einer der Speichereinrichtungen zwischengespeicherten Stableiter können sodann gemeinsam der Biegemaschine zugeführt werden. Durch Biegen der ungebogenen Stableiter können gebogene Stableiter erhalten werden.

Vorzugsweise weist die Fertigungsanlage weiterhin einen optischen Sensor zum Erkennen von Farbmarkierungen und/oder Fehlstellen an dem Draht und eine Steuereinrichtung auf. Farbmarkierungen können bei der Herstellung des Drahtes angebracht worden sein, um Fehlstellen des Drahtes, insbesondere seiner Isolierschicht, zu kennzeichnen. Ob und wo solche Farbmarkierungen vorhanden sind, kann mit dem optischen Sensor erkannt werden. Besonders vorteilhaft ist es, wenn der optische Sensor auch zum selbsttätigen Erkennen (weiterer) Fehlstellen der Isolierschicht des Drahtes eingerichtet ist. Die Steuereinrichtung ist dazu eingerichtet,
- eine Drehung des Rotors in der zweiten Richtung zu veranlassen, wenn ein Stableiter mit einer erkannten Farbmarkierung und/oder einer erkannten Fehlstelle zu der an der Aufnahmestelle befindlichen Aufnahme des Rotors verbracht wurde, und
- in einer Mehrzahl von Fällen eine Drehung des Rotors in der ersten Richtung zu veranlassen, wenn ein Stableiter ohne eine erkannte Farbmarkierung und ohne eine erkannte Fehlstelle zu der an der Aufnahmestelle befindlichen Aufnahme des Rotors verbracht wurde.

Durch Drehen des Rotors in der zweiten Richtung werden die fehlerhaften Stableiter im Takt des Fertigungsprozesses aussortiert. Durch Drehen des Rotors in der ersten Richtung werden die für gut befundenen Stableiter zu der Übergabestelle gebracht, von wo aus sie einer Weiterverarbeitung, etwa in einer Biegemaschine zugeführt werden können. In Sonderfällen, beispielsweise für statistische Prüfzwecke, kann die Steuereinrichtung auch bei Stableitern ohne erkannte Farbmarkierung und ohne erkannte Fehlstelle ein Drehen des Rotors in der zweiten Richtung veranlassen.

### Erfindungsgemäßes Sortierverfahren

In den Rahmen der vorliegenden Erfindung fällt zudem ein Verfahren zum Sortieren von Stableitern im Rahmen eines Fertigungsprozesses. Das Sortierverfahren kann insbesondere mit einer oben beschriebenen, erfindungsgemäßen Sortiermaschine, vorzugsweise einer oben beschriebenen, erfindungsgemäßen Fertigungsanlage durchgeführt werden. Das Sortierverfahren weist die folgenden Schritte auf:
B) wiederholtes Auflegen je eines Stableiters an einer Aufnahmestelle auf eine Aufnahme eines in zwei entgegengesetzten Richtungen drehbaren Rotors und Prüfen ob der jeweilige Stableiter eine Fehlstelle aufweist;
C) in einer Mehrzahl von Fällen, in denen keine Fehlstelle an dem jeweiligen Stableiter erkannt wurde, Drehen des Rotors in einer ersten Richtung, sodass der jeweilige Stableiter von der Aufnahmestelle zu einer Übergabestelle für eine Weiterverarbeitung im Rahmen des Fertigungsprozesses verbracht wird;
D) Drehen des Rotors in einer zweiten Richtung, sodass der jeweilige Stableiter aus dem Fertigungsprozess ausgeschleust wird, wenn eine Fehlstelle an dem jeweiligen Stableiter erkannt wurde.

Die Stableiter können in einem Schritt A) von der Fertigungsanlage bereitgestellt werden. Insofern sei auf die vorstehende Beschreibung insbesondere der Abrolleinrichtung, Richteinrichtung, Abisoliereinrichtung und Trenneinrichtung verwiesen. Es versteht sich, dass die Stableiter prinzipiell auch anderweitig bereitgestellt werden könnten.

Im Schritt B) wird mehrfach nacheinander (d. h. wiederholt) je ein Stableiter auf eine der Aufnahmen des Rotors aufgelegt. Die jeweilige Aufnahme befindet sich beim Auflegen des Stableiters an der Aufnahmestelle. Zwischen dem Auflegen zweier Stableiter auf zwei der Aufnahmen wird der Rotor im Rahmen der Schritte C) und D) gedreht, sodass eine andere Aufnahme an der Aufnahmestelle positioniert wird.

Das Prüfen auf Fehlstellen kann vor dem Auflegen und/oder während des Auflegens erfolgen. Die Fehlstelle kann durch eine Farbmarkierung angezeigt sein. Die Farbmarkierung und/oder die Fehlstelle selbst können durch einen optischen Sensor erkannt werden. Vorzugsweise erfolgt das Prüfen vor dem Auflegen. Dies vereinfacht eine allseitige Prüfung des Stableiters. Zum Auflegen kann der Stableiter mit einem Greifer gegriffen und auf der Auflage abgelegt werden.

Das Drehen des Rotors in den Schritten C) und D) erfolgt grundsätzlich schrittweise entsprechend einer Teilung der Aufnahmen in Umfangsrichtung des Rotors. Durch wahlweises Drehen des Rotors in der ersten oder der zweiten Richtung können die Stableiter im Takt ihrer Bereitstellung sortiert werden. Für die Geschwindigkeit bzw. Dauer des Sortiervorgangs ist es unerheblich, ob die Stableiter zu der Übergabestelle verbracht werden oder aus dem Fertigungsprozess ausgeschleust werden. Die im Schritt D) ausgeschleusten Stableiter können in einer Sammelvorrichtung für Ausschuss gesammelt werden.

Wenn keine Fehlstelle erkannt wurde, wird der Rotor typischerweise (für eine Mehrzahl der Stableiter ohne erkannte Fehlstelle) in der ersten Richtung gedreht. Die Stableiter gelangen dann zur Übergabestelle. Die im Schritt C) an die Übergabestelle verbrachten Stableiter können einer weiteren Bearbeitung, insbesondere einem Biegevorgang, unterzogen werden. Hierzu können die Stableiter einzeln oder zu mehreren zu einer Biegemaschine verbracht werden.

In Einzelfällen kann der Rotor in der zweiten Richtung gedreht werden, wenn keine Fehlstelle erkannt wurde. Dies kann insbesondere erfolgen, nachdem eine vorgegebene Anzahl von Stableitern durch Drehen des Rotors in der ersten Richtung zu der Übergabestelle verbracht wurde. Der jeweilige Stableiter ohne erkannte Fehlstelle kann einer Überprüfung zugeführt werden. Insbesondere können die aus dem Fertigungsprozess ausgeschleusten Stableiter ohne erkannte Fehlstelle in einer Sammelvorrichtung für Prüfmuster gesammelt werden. Beispielsweise kann jeder hundertste, fünfhundertste oder tausendste Stableiter zur Überprüfung vorgesehen sein. Für eine Zuleitung der ausgeschleusten Stableiter zu den Sammelvorrichtungen für Prüfmuster oder Ausschuss kann eine Weiche einer Ausschleuseinrichtung umgestellt werden.

Weitere Merkmale und Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine Prinzipdarstellung einer erfindungsgemäßen Fertigungsanlage mit einer erfindungsgemäßen Sortiermaschine bei der Durchführung eines erfindungsgemäßen Sortierverfahrens;
- Fig. 2: eine erste Ausführungsform einer erfindungsgemäßen Sortiermaschine in einer schematischen Perspektivansicht;
- Fig. 3: eine schematische Querschnittsansicht durch die Sortiermaschine von Figur 2, wobei zu erkennen ist, dass ein Rotor drei Flügel mit je einer Aufnahme für Stableiter aufweist;
- Fig. 4: eine vergrößerte Teilansicht der Sortiermaschine von Figur 2, wobei zu erkennen ist, dass Schienensegmente Ausnehmungen in den Flügeln des Rotors durchgreifen;
- Fig. 5: eine vergrößerte Querschnittsansicht der Sortiermaschine von Figur 2, wobei eine Rutsche mit einer Weiche zwei Speichereinrichtungen für weiterzuverarbeitende Stableiter zu erkennen sind;
- Fig. 6: eine weitere Perspektivansicht der Sortiermaschine von Figur 2;
- Fig. 7: eine zweite Ausführungsform einer erfindungsgemäßen Sortiermaschine mit einem zweiflügeligen Rotor, in einer schematischen, ausschnittsweisen Querschnittsansicht;

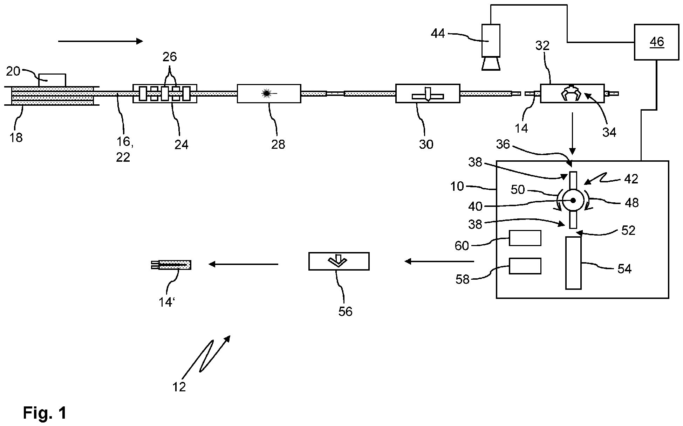

**Figur 1** zeigt eine Sortiermaschine **10,** die Bestandteil einer Fertigungsanlage **12** für Stableiter **14** ist. Die Fertigungsanlage 12 umfasst mehrere Stationen, mit denen zunächst gerade (ungebogene) Stableiter 14 hergestellt werden. Die geraden Stableiter 14 werden sodann von der Sortiermaschine 10 sortiert. Zur Weiterverarbeitung vorgesehene Stableiter 14 werden zu gebogenen Stableitern **14'** gebogen.

Die Stableiter 14 werden aus Draht **16,** insbesondere Kupferdraht, mit rechteckigem Querschnitt hergestellt. Der Draht 16 ist zunächst auf einer Spule **18** aufgewickelt. Mittels einer Abrolleinrichtung **20,** welche die Spule 18 antreiben kann und/oder am Draht 16 ziehen kann (nicht näher dargestellt), wird der Draht 16 von der Spule 18 abgewickelt. Der auf der Spule 18 bereitgestellte Draht 16 ist durchgängig mit einer Isolierschicht **22** ummantelt.

Nach dem Abwickeln wird der Draht 16 zunächst mittels einer Richteinrichtung **24** gerade gerichtet. Die Richteinrichtung 24 umfasst hier mehrere auf unterschiedlichen Seiten des Drahtes angeordnete Rollen **26.**

Sodann wird mittels einer Abisoliereinrichtung **28** bereichsweise die Isolierschicht 22 vom Draht 16 entfernt. Die Abisoliereinrichtung 28 kann einen Laser zum Verdampfen bzw. Abschmelzen der Isolierschicht 22 aufweisen.

In den abisolierten Bereichen wird der Draht 16 daraufhin mittels einer Trenneinrichtung **30** in Stücke geteilt, sodass einzelne gerade Stableiter 14 (sogenannte I-Pins) erhalten werden.

Die Stableiter 14 werden mit einer Zuführeinrichtung **32,** die einen Greifer **34** aufweisen kann, zu der Sortiermaschine 10 verbracht. Die Zuführeinrichtung 32 legt die Stableiter jeweils an einer Aufnahmestelle **36** auf einer von mehreren Aufnahmen **38** der Sortiermaschine 10 ab. Die Aufnahmen 38 sind an einem um eine Drehachse **40** drehbaren Rotor **42** ausgebildet.

Ein optischer Sensor **44** prüft die Stableiter 14 vor oder bei der Übergabe an die Sortiermaschine 10 auf Fehlstellen. Solche Fehlstellen können beispielsweise durch Farbmarkierungen gekennzeichnet sein. Der optische Sensor 44 ist mit einer Steuereinrichtung **46** verbunden.

Wenn keine Fehlstelle erkannt wurde, veranlasst die Steuereinrichtung 46 in den allermeisten Fällen eine Drehung des Rotors 42 in einer ersten Richtung **48.** Wenn eine Fehlstelle erkannt wurde, veranlasst die Steuereinrichtung 46 stets eine Drehung des Rotors 42 in einer zweiten Richtung **50.** In Sonderfällen, beispielsweise nach einer bestimmten Anzahl von Stableitern 14, kann die Steuereinrichtung 46 eine Drehung des Rotors 42 in der zweiten Richtung 50 veranlasst auch wenn keine Fehlstelle erkannt wurde.

Bei einer Drehung des Rotors 42 in der ersten Richtung 48 wird der jeweils aufgelegte Stableiter 14 zu einer Übergabestelle **52** verbracht. Dies wird nachfolgend anhand zweier Ausführungsbeispiele der Sortiermaschine 10 noch näher erläutert. An der Übergabestelle 52 können die Stableiter 14 in eine Speichereinrichtung **54** eingebracht werden.

Mit der Speichereinrichtung 54 werden die Stableiter 14 zu einer Biegemaschine **56** verbracht. Die Biegemaschine 56 biegt die bisher geraden Stableiter 14, sodass gebogene Stableiter 14' (sogenannte Hair-Pins) erhalten werden. Die gebogenen Stableiter 14' können sodann beispielsweise in einen Stator für einen Elektromotor eingesetzt werden (nicht näher dargestellt).

Bei einer Drehung des Rotors 42 in der zweiten Richtung 50 wird der jeweils aufgelegte Stableiter 14 aus dem Fertigungsprozess ausgeschleust. Die auszuschleusenden Stableiter 14 können insbesondere in Sammelvorrichtungen **58, 60** geleitet werden. Dies wird nachfolgend anhand der Ausführungsbeispiele der Sortiermaschine 10 noch näher erläutert. Wenn eine Fehlstelle erkannt wurde, wird der jeweilige Stableiter 14 in eine Sammelvorrichtung 58 für Ausschuss geleitet. Wenn keine Fehlstelle erkannt wurde, wird der jeweilige Stableiter 14 in eine Sammelvorrichtung 60 für Prüfteile geleitet.

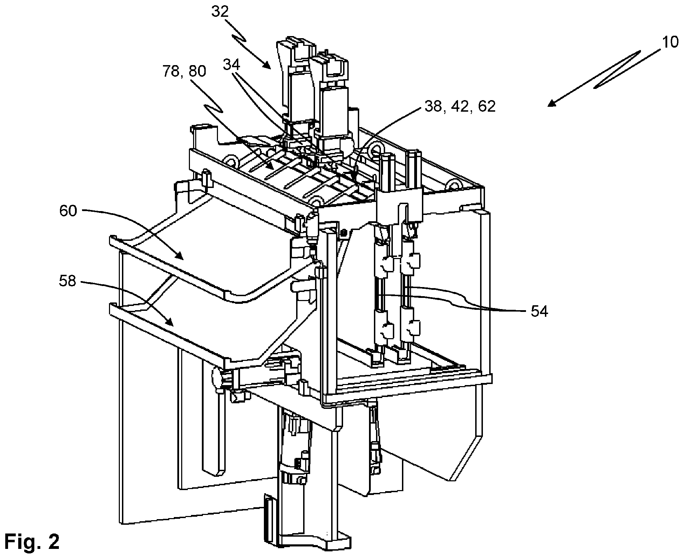

Die **Figuren 2** bis **6** zeigen eine erste Ausführungsform der Sortiermaschine 10 in verschiedenen Ansichten.

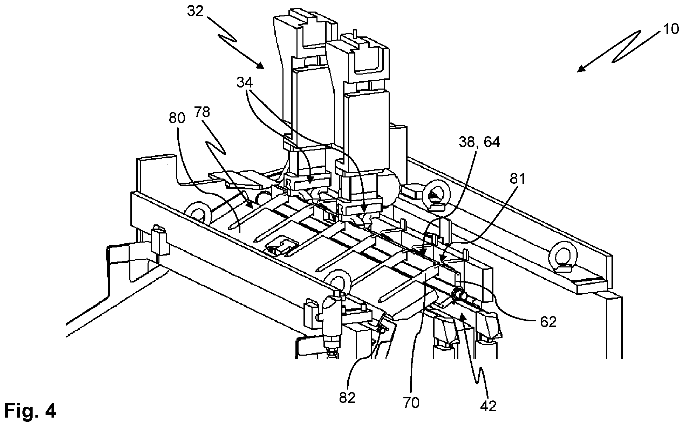

In den Figuren 2 und 4 ist zu erkennen, dass die Zuführeinrichtung 32 vorliegend zwei Greifer 34 aufweist. Ein Stableiter 14 (vergleiche Figur 1) kann so besonders sicher und präzise gehandhabt werden.

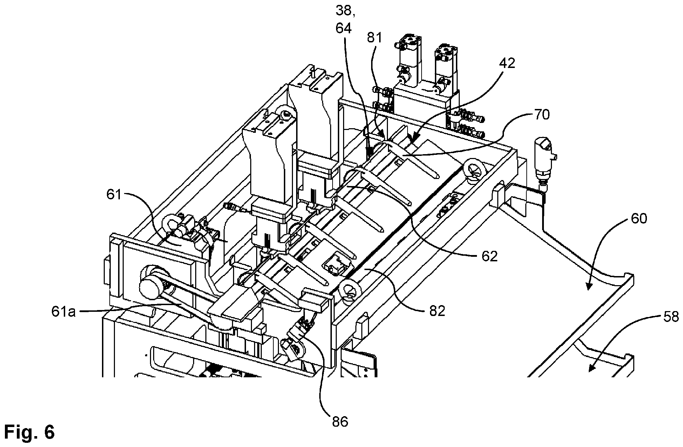

Ein Antriebsmotor **61** für den Rotor 42 kann parallel versetzt zu dessen Drehachse 40 angeordnet sein, vergleiche Figur 6. Vorliegend ist der Antriebsmotor 61 über einen Zahnriemen **61a** mit dem Rotor gekoppelt.

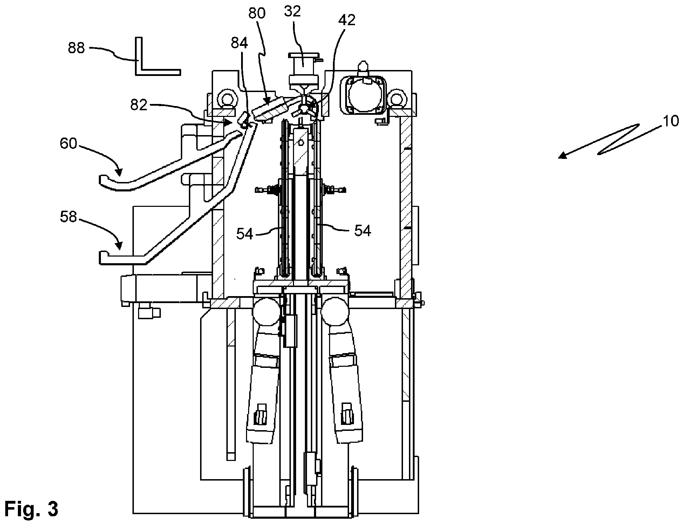

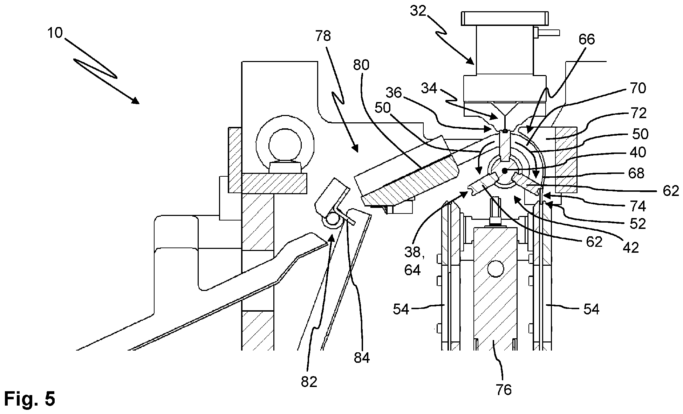

Der Rotor 42 weist bei der ersten Ausführungsform drei Flügel **62** auf, vergleiche Figuren 3, 4 und insbesondere Figur 5. Die Flügel 62 erstrecken sich jeweils in radialer Richtung von der Drehachse 40 weg. Die Flügel 62 sind jeweils um 120° gegeneinander gedreht ausgerichtet. An freien Enden der Flügel 62 ist jeweils die Aufnahme 38 mit einer Aufnahmerille **64** gebildet.

Die Aufnahmestelle 36 befindet sich senkrecht über der Drehachse 40. Die Übergabestelle 52 ist bei dieser Ausführungsform seitlich versetzt unterhalb der Drehachse 40 angeordnet.

Um einen Stableiter 14 von der Aufnahmestelle 36 zu der Übergabestelle 52 zu verbringen, wird der Rotor 42 um 120° in der ersten Richtung 48 gedreht. Um den Stableiter 14 zunächst an der Aufnahme 38 zu halten und zu der Übergabestelle 52 zu leiten, ist eine Führungseinrichtung **66** mit einer Führungsnut **68** vorgesehen. Zur Drehachse 40 des Rotors 42 hin ist die Führungsnut 68 durch Schienensegmente **70** begrenzt. Von der Drehachse 40 des Rotors 42 weg ist die Führungsnut 68 durch Kulissenteile **72** begrenzt.

Die Führungsnut 68 endet an der Übergabestelle 52 mit einem vertikal verlaufenden Nutabschnitt **74.** Beim Drehen des Rotors 42 um 120° in der ersten Richtung 48 wird der aufgenommene Stableiter 14 zunächst ebenfalls um 120° gedreht. Wenn der Flügel 62 mit dem Stableiter 14 die von der Aufnahmestelle 36 aus in der ersten Richtung 48 um 120° gedrehte Position erreicht hat, löst sich der Stableiter 14 von der Aufnahme 38. Der Stableiter 14 fällt dann in dem vertikalen Nutabschnitt 74 der Führungsnut 68 nach unten. Dabei wird der Stableiter 14 um 30° zurückgedreht. Der Stableiter 14 erreicht die Übergabestelle 52 somit in einer Ausrichtung, die gegenüber seiner Ausrichtung an der Aufnahmestelle 36 um 90° gedreht ist. Wenn beim Auflegen des Stableiters 14 auf die Aufnahme 38 eine Breitseite des Stableiters 14 nach unten zeigte, so zeigt nun eine Schmalseite des Stableiters 14 nach unten.

An der Übergabestelle 52 wird der Stableiter 14 in eine Speichereinrichtung 54, die hier als eine Kassette ausgebildet ist, eingebracht. Da der Stableiter 14 hochkant, d. h. mit einer Schmalseite nach unten, ausgerichtet ist kann ein Kippen des Stableiters 14 in der Speichereinrichtung 54 vermieden werden, indem deren Aufnahmeraum hinreichend schmal bemessen ist.

Vorliegend sind zwei Speichereinrichtungen 54 vorgesehen. Mittels einer Wechseleinrichtung **76** kann wahlweise eine der beiden Speichereinrichtungen 54 an der Übergabestelle 52 angeordnet werden, um Stableiter 14 aufzunehmen. Der Fertigungsablauf muss für den Wechsel zwischen den Speichereinrichtungen 54 nicht unterbrochen werden, sondern allenfalls kurzzeitig verlangsamt werden. Eine gefüllte Speichereinrichtung 54 kann somit während des laufenden Betriebs der Fertigungsanlage 12 durch eine leere Speichereinrichtung 54 ersetzt werden.

Um einen Stableiter 14 von der Aufnahmestelle 36 aus dem Fertigungsprozess auszuschleusen, insbesondere in eine der Sammeleinrichtungen 58, 60 zu verbringen, wird der Rotor 42 um 120° in der zweiten Richtung 50 gedreht. Während dieser Drehung löst eine Ausschleuseinrichtung **78** den jeweiligen Stableiter 14 von der Aufnahme 38.

Die Ausschleuseinrichtung 78 ist mit einer Rutsche **80** gebildet. Die Schienensegmente 70, welche die Führungsnut 68 zur Drehachse 40 hin begrenzen, sind auch Teil der Ausschleuseinrichtung 78. Die Schienensegmente 70 erstrecken sich durch Rücknehmungen **81** in den Flügeln 62 hindurch, vergleiche Figuren 4, 5 und 6. Bei der Drehung des Rotors 42 in der zweiten Richtung 50 untergreifen die Schienensegmente 70 den Stableiter 14 und heben ihn aus der Aufnahme 38 aus. Sodann gleitet der Stableiter 14 auf der Rutsche 80 ab.

Um die Stableiter 14 wahlweise der Sammelvorrichtung 58 für Ausschuss oder der Sammelvorrichtung 60 für Prüfteile zuzuleiten, weist die Ausschleuseinrichtung 78 eine Weiche **82** an der Rutsche 80 auf. Die Weiche 82 ist hier mit einer L-förmigen Klappe **84** gebildet (vergleiche insbesondere Figur 5), welche durch einen Aktuator **86** (vergleiche Figur 6) verschwenkt werden kann. Bei der in Figur 5 gezeigten Stellung der Weiche 82 werden die Stableiter 14 in die Sammelvorrichtung 58 für Ausschuss geleitet.

Zusätzlich zu der Rutsche 80 kann die Ausschleuseinrichtung 78 ein, vorzugsweise gabelförmiges, Entnahmewerkzeug **88** aufweisen, vergleiche Figur 3. Das Entnahmewerkzeug 88 kann mittels einer nicht näher dargestellten Mechanik zu dem Rotor 42 bewegt werden, um zwischen die Schienensegmente 70 einzugreifen und einen Stableiter 14 aus der Aufnahme 38 zu heben. Der Stableiter 14 kann sodann mit dem Entnahmewerkzeug 88 von der Sortiermaschine 10 weggebracht werden.

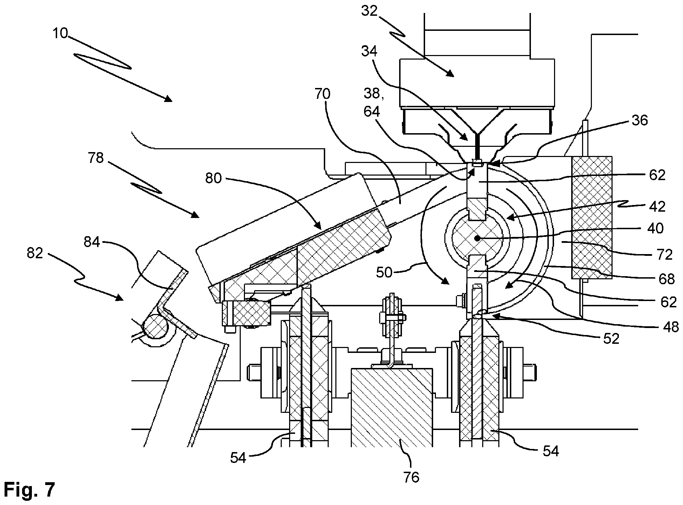

**Figur 7** zeigt eine zweite Ausführungsform der Sortiermaschine 10. Die zweite Ausführungsform entspricht im Wesentlichen der in den Figuren 2 bis 6 gezeigten ersten Ausführungsform; insofern sei auf die vorstehende Beschreibung verwiesen. Nachfolgend werden vorrangig die Unterschiede beschrieben.

Bei der Sortiermaschine 10 von Figur 7 weist der Rotor 42 zwei einander bezüglich seiner Drehachse 40 gegenüberliegende Aufnahmen 38 auf. Die Aufnahmen 38 sind jeweils an einem radial abragenden Flügel 62 ausgebildet, wobei die Flügel um 180° gegeneinander versetzt sind.

Hier liegen die Aufnahmestelle 36 und die Übergabestelle 52 einander bezüglich der Drehachse 40 gegenüber. Die Aufnahmestelle 36 befindet sich senkrecht über der Drehachse 40. Die Übergabestelle 52 ist bei dieser Ausführungsform senkrecht unter der Drehachse 40 angeordnet.

Die Führungseinrichtung 66 umfasst eine Führungsnut 68, die von Schienensegmenten 70 und Kulissenteilen 72 begrenzt wird. Die Führungsnut 68 verläuft in einem zur Drehachse 40 konzentrischen Halbkreis. Bei Drehung des Rotors 42 in der ersten Richtung 48 wird der aufgenommene Stableiter 14 bis zu der Übergabestelle 52 an der Aufnahme 38 gehalten.

Bei der Drehung des Rotors 42 um 180° in der ersten Richtung 48 wird der Stableiter 14 somit ebenfalls um 180° gedreht. Wenn beim Auflegen des Stableiters 14 auf die Aufnahme 38 eine Breitseite des Stableiters 14 nach unten zeigte, so zeigt nun die andere Breitseite des Stableiters 14 nach unten. An der Übergabestelle 52 löst sich der Stableiter 38 von der Aufnahme 38 und kann unmittelbar in eine Speichereinrichtung 54 eingebracht werden.

Zusammenfassend betrifft die Erfindung eine Sortiermaschine für gerade (ungebogene) Stableiter. Die Sortiermaschine weist einen Rotor mit wenigstens zwei in Umfangsrichtung gleichmäßig verteilten Aufnahmen für je einen Stableiter auf. Zum Sortieren wird ein jeweiliger Stableiter auf eine der Aufnahmen aufgelegt. Der Rotor wird dann entsprechend der Teilung der Aufnahmen um einen Bruchteil einer Umdrehung in die eine oder die andere Richtung gedreht. Je nach Drehrichtung wird der Stableiter an unterschiedliche Orte geführt. Insbesondere können zur Weiterverarbeitung bestimmte Stableiter in eine Speichereinrichtung eingefügt werden; nicht weiterzuverarbeitende Stableiter können in eine Sammelvorrichtung geleitet werden. Bei der Drehung des Rotors zum Sortieren des jeweiligen Stableiters, wird zugleich die jeweils nächste Aufnahme so positioniert, dass ein weiterer Stableiter aufgelegt werden kann. Das schrittweise Drehen des Rotors erfolgt grundsätzlich schneller als die Bereitstellung der Stableiter. Die Dauer eines Sortiervorgangs (Drehung des Rotors bis die nächste Aufnahme für einen weiteren Stableiter bereit steht) kann weniger als 1 Sekunde, insbesondere weniger als 0,8 Sekunden betragen.

### Bezugszeichenliste

Sortiermaschine **10**
Fertigungsanlage **12**
ungebogene/gerade Stableiter **14**
gebogene Stableiter **14'**
Draht **16**
Spule **18**
Abrolleinrichtung **20**
Isolierschicht **22**
Richteinrichtung **24**
Rollen **26**
Abisoliereinrichtung **28**
Trenneinrichtung **30**
Zuführeinrichtung **32**
Greifer **34**
Aufnahmestelle **36**
Aufnahme **38**
Drehachse **40**
Rotor **42**
optischer Sensor **44**
Steuereinrichtung **46**
erste Richtung **48**
zweite Richtung **50**
Übergabestelle **52**
Speichereinrichtung **54**
Biegemaschine **56**
Sammelvorrichtung **58** für Ausschuss
Sammelvorrichtung **60** für Prüfteile
Antriebsmotor **61**
Zahnriemen **61a**
Flügel **62**
Aufnahmerille **64**
Führungseinrichtung **66**
Führungsnut **68**
Schienensegmente **70**
Kulissenteile **72**
vertikaler Nutabschnitt **74**
Wechseleinrichtung **76**
Ausschleuseinrichtung **78**
Rutsche **80**
Rücknehmungen **81**
Weiche **82**
Klappe **84**
Aktuator **86**
Entnahmewerkzeug **88**

## Patentansprüche

1. Sortiermaschine (10) für Stableiter (14) aufweisend
- einen in zwei entgegengesetzten Richtungen um eine Drehachse (40) drehbaren Rotor (42) mit wenigstens zwei in Umfangsrichtung gegeneinander versetzten Aufnahmen (38) für je einen Stableiter (14),
- eine Zuführeinrichtung (32), insbesondere einen Greifer (34), zum Verbringen je eines Stableiters (14) zu einer an einer Aufnahmestelle (36) befindlichen Aufnahme (38) des Rotors (42),
- eine Führungseinrichtung (66), um bei einer Drehung des Rotors (42) in einer ersten Richtung (48) den an der Aufnahmestelle (36) von einer der Aufnahmen (38) aufgenommenen Stableiter (14) von der Aufnahme (38) zu einer Übergabestelle (52) zu führen,
- eine Ausschleuseinrichtung (78), um bei einer Drehung des Rotors (42) in einer zweiten Richtung (50) den an der Aufnahmestelle (36) von einer der Aufnahmen (38) aufgenommenen Stableiter (14) von der Aufnahme (38) zu entnehmen.

2. Sortiermaschine (10) nach Anspruch 1, **dadurch gekennzeichnet, dass** die Führungseinrichtung (66) eine Führungsnut (68) aufweist.

3. Sortiermaschine (10) nach Anspruch 1 oder 2, **dadurch gekennzeichnet, dass** die Aufnahmen (38) je mit einer Aufnahmerille (64) gebildet sind.

4. Sortiermaschine (10) nach einem der vorhergehenden Ansprüche, **dadurch gekennzeichnet, dass** die Aufnahmen (38) jeweils an einem Flügel (62) des Rotors (42) ausgebildet sind, dass die Führungseinrichtung (66) und die Ausschleuseinrichtung (78) gemeinsame Schienensegmente (70) aufweisen, und dass die Flügel (62) jeweils radiale Rücknehmungen (81) für einen Eingriff der Schienensegmente (70) aufweisen.

5. Sortiermaschine (10) nach einem der Ansprüche 1 bis 4, **dadurch gekennzeichnet, dass** der Rotor (42) zwei einander bezüglich der Drehachse (40) gegenüberliegende Aufnahmen (38) aufweist.

6. Sortiermaschine (10) nach Anspruch 5, **dadurch gekennzeichnet, dass** die Führungseinrichtung (66) eine Drehung des Stableiters (14) zwischen der Aufnahmestelle (36) und der Übergabestelle (52) um 180° bewirkt,
bevorzugt wobei die Übergabestelle (52) der Aufnahmestelle (36) bezüglich der Drehachse (40) des Rotors (42) gegenüberliegt, und besonders bevorzugt wobei die Führungseinrichtung (66) den Stableiter (14) bis zur Übergabestelle (52) an der Aufnahme (38) hält.

7. Sortiermaschine (10) nach einem der Ansprüche 1 bis 4, **dadurch gekennzeichnet, dass** der Rotor (42) drei bezüglich der Drehachse (40) um jeweils 120° gegeneinander versetzte Aufnahmen (38) aufweist.

8. Sortiermaschine (10) nach Anspruch 7, **dadurch gekennzeichnet, dass** die Führungseinrichtung (66) eine Drehung des Stableiters (14) zwischen der Aufnahmestelle (36) und der Übergabestelle (52) um 90° bewirkt,
bevorzugt wobei die Übergabestelle (52) bezüglich der Aufnahmestelle (36) seitlich versetzt ist, besonders bevorzugt wobei die Führungseinrichtung (66) den Stableiter (14) vor der Übergabestelle (52) von der Aufnahme (38) löst.

9. Sortiermaschine (10) nach Anspruch 2 und nach Anspruch 8, **dadurch gekennzeichnet, dass** die Führungsnut (68) an der Übergabestelle (52) mit einem vertikal verlaufenden Nutabschnitt (74) endet.

10. Sortiermaschine (10) nach einem der vorhergehenden Ansprüche, **dadurch gekennzeichnet, dass** die Ausschleuseinrichtung (78) eine Rutsche (80) aufweist.

11. Sortiermaschine (10) nach Anspruch 10, **dadurch gekennzeichnet, dass** die Ausschleuseinrichtung (78) eine Weiche (82) aufweist, um Stableiter (14) von der Rutsche (80) wahlweise einer von mehreren unterschiedlichen Sammelvorrichtungen (58, 60) zuzuführen.

12. Sortiermaschine (10) nach einem der vorhergehenden Ansprüche, **dadurch gekennzeichnet, dass** die Ausschleuseinrichtung (78) ein Entnahmewerkzeug (88), vorzugsweise eine Gabel, zum Ausheben des Stableiters (14) aus der Aufnahme (38) aufweist.

13. Sortiermaschine (10) nach einem der vorhergehenden Ansprüche, **dadurch gekennzeichnet, dass** eine Speichereinrichtung (54), insbesondere eine Kassette, zur Aufnahme (38) der Stableiter (14) an der Übergabestelle (52) vorgesehen ist.

14. Sortiermaschine (10) nach Anspruch 13, **dadurch gekennzeichnet, dass** eine Wechseleinrichtung (76) vorgesehen ist, um wahlweise eine von mehreren Speichereinrichtungen (54), insbesondere Kassetten, an der Übergabestelle (52) anzuordnen.

15. Fertigungsanlage (12) für Stableiter (14) aufweisend
- eine Abrolleinrichtung (20) zum Abwickeln von Draht (16) von einer Spule (18),
- eine Richteinrichtung (24) zum Geraderichten des abgewickelten Drahts (16),
- eine Abisoliereinrichtung (28) zum bereichsweisen Entfernen einer Isolierschicht (22) von dem Draht (16),
- eine Trenneinrichtung (30) zum Zerteilen des Drahtes (16), sodass einzelne Stableiter (14) erhalten werden,
- eine Sortiermaschine (10) nach einem der vorhergehenden Ansprüche.

16. Fertigungsanlage (12) nach Anspruch 15 weiterhin aufweisend eine Biegemaschine (56) zum Biegen der Stableiter.

17. Fertigungsanlage nach Anspruch 15 oder 16 weiterhin aufweisend einen optischen Sensor (44) zum Erkennen von Farbmarkierungen und/oder Fehlstellen an dem Draht (16), und eine Steuereinrichtung (46), die dazu eingerichtet ist,
- eine Drehung des Rotors (42) in der zweiten Richtung (50) zu veranlassen, wenn ein Stableiter (14) mit einer erkannten Farbmarkierung und/oder einer erkannten Fehlstelle zu der an der Aufnahmestelle (36) befindlichen Aufnahme (38) des Rotors (42) verbracht wurde, und
- in einer Mehrzahl von Fällen eine Drehung des Rotors (42) in der ersten Richtung (48) zu veranlassen, wenn ein Stableiter (14) ohne eine erkannte Farbmarkierung und ohne eine erkannte Fehlstelle zu der an der Aufnahmestelle (36) befindlichen Aufnahme (38) des Rotors (42) verbracht wurde.

18. Verfahren zum Sortieren von Stableitern (14) im Rahmen eines Fertigungsprozesses, insbesondere mit einer Sortiermaschine (10) nach einem der Ansprüche 1 bis 14, vorzugsweise einer Fertigungsanlage nach einem der Ansprüche 15 bis 17, mit den Schritten
B) wiederholtes Auflegen je eines Stableiters (14) an einer Aufnahmestelle (36) auf eine Aufnahme (38) eines in zwei entgegengesetzten Richtungen drehbaren Rotors (42) und Prüfen ob der jeweilige Stableiter (14) eine Fehlstelle aufweist,
C) in einer Mehrzahl von Fällen, in denen keine Fehlstelle an dem jeweiligen Stableiter (14) erkannt wurde, Drehen des Rotors (42) in einer ersten Richtung, sodass der jeweilige Stableiter (14) von der Aufnahmestelle (36) zu einer Übergabestelle (52) für eine Weiterverarbeitung im Rahmen des Fertigungsprozesses verbracht wird,
D) Drehen des Rotors (42) in einer zweiten Richtung (50), sodass der jeweilige Stableiter (14) aus dem Fertigungsprozess ausgeschleust wird, wenn eine Fehlstelle an dem jeweiligen Stableiter (14) erkannt wurde.

19. Verfahren nach Anspruch 18, **dadurch gekennzeichnet, dass** in Einzelfällen der Rotor (42) in der zweiten Richtung (50) gedreht wird, wenn keine Fehlstelle erkannt wurde, insbesondere nachdem eine vorgegebene Anzahl von Stableitern (14) durch Drehen des Rotors (42) in der ersten Richtung (48) zu der Übergabestelle (52) verbracht wurde.

20. Verfahren nach Anspruch 18 oder 19, **dadurch gekennzeichnet, dass** die im Schritt C) an die Übergabestelle (52) verbrachten Stableiter (14) einer weiteren Bearbeitung, insbesondere einem Biegevorgang, unterzogen werden.

## Claims

1. Sorting machine (10) for bar conductors (14), comprising
- a rotor (42) which is rotatable in two opposite directions about a rotation axis (40) and has at least two receptacles (38) for one bar conductor (14) each, which receptacles are offset from one another in the circumferential direction,
- a feed device (32), in particular a gripper (34), for bringing one bar conductor (14) in each case to a receptacle (38) of the rotor (42) located at a receiving point (36),
- a guide device (66) for guiding the bar conductor (14), which is received at the receiving point (36) by one of the receptacles (38), from the receptacle (38) to a transfer point (52) when the rotor (42) is rotated in a first direction (48),
- a discharge device (78) for removing the bar conductor (14), which is received at the receiving point (36) by one of the receptacles (38), from the receptacle (38) when the rotor (42) is rotated in a second direction (50).

2. Sorting machine (10) according to claim 1, **characterized in that** the guide device (66) has a guide groove (68).

3. Sorting machine (10) according to claim 1 or claim 2, **characterized in that** the receptacles (38) are each formed with a receiving notch (64).

4. Sorting machine (10) according to any of the preceding claims,
**characterized in that** the receptacles (38) are each formed on a wing (62) of the rotor (42), **in that** the guide device (66) and the discharge device (78) have common rail segments (70), **and in that** the wings (62) each have radial recesses (81) for engagement of the rail segments (70).

5. Sorting machine (10) according to any of claims 1 to 4, **characterized in that** the rotor (42) has two receptacles (38) which are opposite one another with respect to the rotation axis (40).

6. Sorting machine (10) according to claim 5, **characterized in that** the guide device (66) causes the bar conductor (14) to rotate by 180° between the receiving point (36) and the transfer point (52), preferably wherein the transfer point (52) is opposite the receiving point (36) with respect to the rotation axis (40) of the rotor (42), and more preferably wherein the guide device (66) holds the bar conductor (14) on the receptacle (38) until the transfer point (52).

7. Sorting machine (10) according to any of claims 1 to 4, **characterized in that** the rotor (42) has three receptacles (38) which are each offset from one another by 120° with respect to the rotation axis (40).

8. Sorting machine (10) according to claim 7, **characterized in that** the guide device (66) causes the bar conductor (14) to rotate by 90° between the receiving point (36) and the transfer point (52), preferably wherein the transfer point (52) is laterally offset with respect to the receiving point (36), more preferably wherein the guide device (66) releases the bar conductor (14) from the receptacle (38) before the transfer point (52).

9. Sorting machine (10) according to claim 2 and claim 8, **characterized in that** the guide groove (68) ends at the transfer point (52) with a vertically extending groove portion (74).

10. Sorting machine (10) according to any of the preceding claims, **characterized in that** the discharge device (78) has a chute (80).

11. Sorting machine (10) according to claim 10, **characterized in that** the discharge device (78) has a switch (82) for selectively feeding bar conductors (14) from the chute (80) to one of a plurality of different collection apparatuses (58, 60).

12. Sorting machine (10) according to any of the preceding claims, **characterized in that** the discharge device (78) has a removal tool (88), preferably a fork, for lifting the bar conductor (14) out of the receptacle (38).

13. Sorting machine (10) according to any of the preceding claims,
**characterized in that** a storage device (54), in particular a case, is provided for receiving the bar conductors (14) at the transfer point (52).

14. Sorting machine (10) according to claim 13, **characterized in that** a switching device (76) is provided for selectively arranging one of a plurality of storage devices (54), in particular cases, at the transfer point (52).

15. Production system (12) for bar conductors (14) comprising
- an unwinding device (20) for unwinding wire (16) from a spool (18),
- a straightening device (24) for straightening the unwound wire (16),
- a stripping device (28) for removing, in regions, an insulating layer (22) from the wire (16),
- a separating device (30) for cutting the wire (16) so that individual bar conductors (14) are obtained,
- a sorting machine (10) according to any of the preceding claims.

16. Production system (12) according to claim 15, further comprising a bending machine (56) for bending the bar conductors.

17. Production system according to claim 15 or claim 16, further comprising an optical sensor (44) for detecting color markings and/or defects on the wire (16), and a control device (46) which is designed
- to cause the rotor (42) to rotate in the second direction (50) when a bar conductor (14) with a detected color marking and/or a detected defect has been brought to the receptacle (38) of the rotor (42) located at the receiving point (36), and
- in a plurality of cases, to cause the rotor (42) to rotate in the first direction (48) when a bar conductor (14) without a detected color marking and without a detected defect has been brought to the receptacle (38) of the rotor (42) located at the receiving point (36).

18. Method for sorting bar conductors (14) as part of a production process, in particular using a sorting machine (10) according to any of claims 1 to 14, preferably using a production system according to any of claims 15 to 17, the method comprising the steps of
B) repeatedly placing one bar conductor (14), in each case, on a receptacle (38) of a rotor (42) at a receiving point (36), which rotor is rotatable in two opposite directions, and checking whether the relevant bar conductor (14) has a defect,
C) in a plurality of cases in which no defect has been detected on the relevant bar conductor (14), rotating the rotor (42) in a first direction so that the relevant bar conductor (14) is brought from the receiving point (36) to a transfer point (52) for further processing as part of the production process,
D) rotating the rotor (42) in a second direction (50) so that the relevant bar conductor (14) is discharged from the production process when a defect has been detected on the relevant bar conductor (14).

19. Method according to claim 18, **characterized in that** in some cases, the rotor (42) is rotated in the second direction (50) when no defect has been detected, in particular after a predetermined number of bar conductors (14) have been brought to the transfer point (52) by rotating the rotor (42) in the first direction (48).

20. Method according to claim 18 or claim 19, **characterized in that** the bar conductors (14) brought to the transfer point (52) in step C) are subjected to further processing, in particular a bending process.

## Revendications

1. Machine de tri (10) destinée à des barres conductrices (14), comprenant
- un rotor (42) apte à tourner dans deux directions opposées, autour d'un axe de rotation (40), et muni d'au moins deux logements (38) mutuellement décalés dans la direction du pourtour, et dont chacun est affecté à une barre conductrice (14),
- un dispositif d'amenée (32), notamment une pince (34) conçu(e) pour transférer une barre conductrice (14) respective à un logement (38) du rotor (42), situé au niveau d'une zone de réception (36),
- un dispositif de guidage (66) conçu pour guider la barre conductrice (14), reçue par l'un des logements (38) au niveau de la zone de réception (36), vers une zone de transfert (52) à partir dudit logement (38) lors d'une rotation du rotor (42) dans une première direction (48),
- un dispositif d'évacuation (78) par lequel, lors d'une rotation dudit rotor (42) dans une seconde direction (50), la barre conductrice (14) reçue par l'un des logements (38), au niveau de la zone de réception (36), est prélevée dudit logement (38).

2. Machine de tri (10) selon la revendication 1, **caractérisée par le fait que** le dispositif de guidage (66) comporte une rainure de guidage (68).

3. Machine de tri (10) selon la revendication 1 ou 2, **caractérisée par le fait que** les logements (38) sont dotés d'une rigole réceptrice (64) respective.

4. Machine de tri (10) selon l'une des revendications précédentes, **caractérisée par le fait que** les logements (38) sont ménagés, à chaque fois, sur une pale (62) du rotor (42) ; **par le fait que** le dispositif de guidage (66) et le dispositif d'évacuation (78) sont pourvus de segments de rails (70) communs ; et **par le fait que** les pales (62) sont nanties de renfoncements radiaux (81) respectifs, dédiés à une venue en prise desdits segments de rails (70).

5. Machine de tri (10) selon l'une des revendications 1 à 4, **caractérisée par le fait que** le rotor (42) compte deux logements (38) opposés l'un à l'autre par rapport à l'axe de rotation (40).

6. Machine de tri (10) selon la revendication 5, **caractérisée par le fait que** le dispositif de guidage (66) provoque une rotation de 180° de la barre conductrice (14) entre la zone de réception (36) et la zone de transfert (52),
sachant que ladite zone de transfert (52) est préférentiellement opposée à ladite zone de réception (36) par rapport à l'axe de rotation (40) du rotor (42) et sachant, avec préférence particulière, que ledit dispositif de guidage (66) retient ladite barre conductrice (14) au niveau du logement (38), jusqu'à ladite zone de transfert (52).

7. Machine de tri (10) selon l'une des revendications 1 à 4, **caractérisée par le fait que** le rotor (42) compte trois logements (38) respectivement décalés de 120°, les uns des autres, par rapport à l'axe de rotation (40).

8. Machine de tri (10) selon la revendication 7, **caractérisée par le fait que** le dispositif de guidage (66) provoque une rotation de 90° de la barre conductrice (14) entre la zone de réception (36) et la zone de transfert (52),
sachant que ladite zone de transfert (52) est préférentiellement décalée dans le sens latéral par rapport à ladite zone de réception (36) et sachant, avec préférence particulière, que ledit dispositif de guidage (66) dissocie ladite barre conductrice (14) d'avec le logement (38) avant ladite zone de transfert (52).

9. Machine de tri (10) selon la revendication 2 et selon la revendication 8, **caractérisée par le fait que** la rainure de guidage (68) s'achève, au niveau de la zone de transfert (52), par un tronçon (74) s'étendant verticalement.

10. Machine de tri (10) selon l'une des revendications précédentes, **caractérisée par le fait que** le dispositif d'évacuation (78) est muni d'une goulotte (80).

11. Machine de tri (10) selon la revendication 10, **caractérisée par le fait que** le dispositif d'évacuation (78) est doté d'un aiguilleur (82) en vue de convoyer sélectivement des barres conductrices (14), à partir de la goulotte (80), vers l'un de plusieurs dispositifs collecteurs (58, 60) différents.

12. Machine de tri (10) selon l'une des revendications précédentes, **caractérisée par le fait que** le dispositif d'évacuation (78) est équipé d'un outil de prélèvement (88), préférentiellement d'une fourche, en vue de soulever la barre conductrice (14) hors du logement (38).

13. Machine de tri (10) selon l'une des revendications précédentes, **caractérisée par le fait qu'**un dispositif de stockage (54), une cassette en particulier, est prévu(e) pour recevoir (38) les barres conductrices (14) au niveau de la zone de transfert (52).

14. Machine de tri (10) selon la revendication 13, **caractérisée par le fait qu'**un dispositif de remplacement (76) est prévu pour positionner sélectivement l'un de plusieurs dispositifs de stockage (54), des cassettes en particulier, au niveau de la zone de transfert (52).

15. Installation de fabrication (12) dévolue à des barres conductrices (14), comprenant
- un dispositif dérouleur (20), conçu pour dévider du fil métallique (16) à partir d'une bobine (18),
- un dispositif de dressage (24), conçu pour redresser le fil métallique (16) dévidé,
- un dispositif de dénudage (28) conçu pour dissocier, par zones, une couche isolante (22) d'avec ledit fil métallique (16),
- un dispositif de séparation (30), conçu pour scinder ledit fil métallique (16) afin d'obtenir des barres conductrices (14) individuelles,
- une machine de tri (10) conforme à l'une des revendications précédentes.

16. Installation de fabrication (12) selon la revendication 15, équipée, en outre, d'une machine de cintrage (56) conçue pour cintrer les barres conductrices.

17. Installation de fabrication selon la revendication 15 ou 16, comprenant, par ailleurs, un capteur optique (44) destiné à identifier des repères colorés et/ou des zones défectueuses sur le fil métallique (16), et un dispositif de commande (46) agencé
- pour provoquer une rotation du rotor (42) dans la seconde direction (50) lorsqu'une barre conductrice (14), présentant un repère coloré identifié et/ou une zone défectueuse identifiée, a été convoyée vers le logement (38) dudit rotor (42) qui est situé au niveau de la zone de réception (36) et,
- dans une pluralité de cas, pour provoquer une rotation dudit rotor (42) dans la première direction (48) lorsqu'une barre conductrice (14), ne présentant aucun repère coloré identifié ni aucune zone défectueuse identifiée, a été convoyée vers ledit logement (38) dudit rotor (42) qui est situé au niveau de ladite zone de réception (36).

18. Procédé de triage de barres conductrices (14) dans le cadre d'un processus de fabrication, notamment à l'aide d'une machine de tri (10) conforme à l'une des revendications 1 à 14, préférentiellement d'une installation de fabrication conforme à l'une des revendications 15 à 17, comprenant les étapes consistant
B) à déposer répétitivement une barre conductrice (14) respective, au niveau d'une zone de réception (36), sur un logement (38) d'un rotor (42) apte à tourner dans deux directions opposées, et à vérifier si ladite barre conductrice (14) respective présente une zone défectueuse,
C) dans une pluralité de cas dans lesquels aucune zone défectueuse n'a été identifiée sur ladite barre conductrice (14) respective, à imprimer une rotation audit rotor (42) dans une première direction, de façon telle que ladite barre conductrice (14) respective soit convoyée vers une zone de transfert (52), à partir de ladite zone de réception (36), en vue d'une poursuite du traitement dans le cadre dudit processus de fabrication,
D) à imprimer une rotation audit rotor (42) dans une seconde direction (50), de façon telle que ladite barre conductrice (14) respective soit retirée dudit processus de fabrication lorsqu'une zone défectueuse a été identifiée sur ladite barre conductrice (14) respective.

19. Procédé selon la revendication 18, **caractérisé par le fait que**, dans des cas individuels, une rotation est imprimée au rotor (42) dans la seconde direction (50) lorsqu'aucune zone défectueuse n'a été identifiée, notamment après qu'un nombre préétabli de barres conductrices (14) a été convoyé vers la zone de transfert (52) par rotation imprimée audit rotor (42) dans la première direction (48).

20. Procédé selon la revendication 18 ou 19, **caractérisé par le fait que** les barres conductrices (14) convoyées vers la zone de transfert (52) à l'étape C) sont soumises à un traitement supplémentaire notamment à une opération de cintrage.
